# EUROPÄISCHE PATENTSCHRIFT

(11) **EP 1 177 940 B1**
(45) Veröffentlichungstag und Bekanntmachung des Hinweises auf die Patenterteilung: **09.07.2008**
(21) Anmeldenummer: 01113244.6
(22) Anmeldetag: 31.05.2001
(51) Int. Cl.: B60Q 1/42

(54) **Rückstellvorrichtung für einen Blinkerschalter in Kraftfahrzeugen**
Vehicle turn signal cancel device
Mécanisme de rappel pour indicateur de direction de véhicule

(30) Priorität: 02.08.2000 DE 10037586
(43) Veröffentlichungstag der Anmeldung: 06.02.2002
(73) Patentinhaber: Valeo Schalter und Sensoren GmbH, 74321 Bietigheim-Bissingen (DE)
(72) Erfinder: Papenfuss, Jürgen, 74343 Sachsenheim (DE); Machalitzky, Otto, 74321 Bietigheim-Bissingen (DE); Hecht, Walter, 74321 Bietigheim-Bissingen (DE)
(74) Vertreter: Dreiss, Fuhlendorf, Steimle & Becker

(56) Entgegenhaltungen:
- DE-A1- 2 201 157
- DE-A1- 3 443 162
- DE-A1- 10 030 275
- DE-B- 1 266 652
- DE-C1- 3 510 345
- FR-A1- 2 293 336
- US-A- 4 739 131

## Beschreibung

Die vorliegende Erfindung betrifft eine Rückstellvorrichtung für einen Blinkerschalter in Kraftfahrzeugen, mit den Merkmalen des Oberbegriffs des Anspruchs 1.

Eine solche Rückstellvorrichtung ist z.B. aus der DE-A-34 43 162 bekannt. Bei einem Einschalten des Blinkerschalters ragt der Auslösefinger nach radial innen zur Lenkspindel in eine Kreisbahn des mit der Lenkspindel verbundenen Nockens hinein. In der Einschalt-Stellung wird das Schaltstück an definierten Rastpunkten gehalten.

Die DE-C-35 10 345 zeigt einen Lenkstockschalter bei dem der Auslösefinger radial nach innen in Richtung zur Lenkspindel ragt und beim Betätigen des Schalthebels in Richtung auf die Lenkspindel verlagert wird. Auch hier treten die oben genannten Probleme auf.

Wenn bei einer entsprechenden Drehbewegung des Lenkrades der mit der Lenkspindel verbundene Nocken am Auslösefinger vorbeibewegt wird, wird der Auslösefinger zur Seite verschwenkt. Dabei greifen an dem Auslösefinger vorhandene Mitnehmerflächen an einem Ansatz des Rastelementes an und ziehen dieses zurück. Auf diese Weise kann das Schaltstück und mit ihm der Blinkerschalter wieder in die neutrale Mittelstellung zurückschnappen.

Die bei der bekannten Rückstellvorrichtung zum Betätigen des Auslösefingers erforderlichen Kräfte sind relativ hoch. Dies ist aufgrund der sehr günstigen Hebelverhältnisse für den Benutzer, der das Lenkrad dreht, zwar nicht spürbar und insoweit unproblematisch. Die bei der Betätigung auftretenden hohen Kräfte führen jedoch an anderer Stelle zu einem Problem: Bei zahlreichen heutigen Kraftfahrzeugen ist im Bereich der Rückstellvorrichtung auch ein Lenkwinkelsensor angeordnet, der auf elektronische Art und Weise zur Bestimmung des Lenkwinkels der Lenkung verwendet wird. Die von dem Lenkwinkelsensor bereitgestellten Signale werden z.B.. von einer elektronischen Stabilisierungseinrichtung für das Kraftfahrzeug verwendet. Die Zuverlässigkeit der von dem Lenkwinkelsensor bereitgestellten Signale ist daher von größter Wichtigkeit. Aus Platzgründen und um die Anzahl der notwendigen Teile zu reduzieren, sind die Rückstellvorrichtung für den Blinkerschalter und der.Lenkwinkelsensor häufig an einem gemeinsamen Träger befestigt.

Aufgrund der besagten, an der Rückstellvorrichtung bei deren Betätigung auftretenden hohen Kräfte kann es zu Verformungen des Trägers kommen, an dem die Rückstellvorrichtung und der Lenkwinkelsensor befestigt sind. Durch diese Verformungen werden die vom Lenkwinkelsensor bereitgestellten Signale verfälscht.

Die vorliegende Erfindung hat daher die Aufgabe, eine Rückstellvorrichtung der eingangs genannten Art so weiter zu bilden, dass die bei der Betätigung des Auslösefingers auftretenden Kräfte geringer sind.

Diese Aufgabe wird bei einer Rückstellvorrichtung gelöst, die die Merkmale des Anspruchs 1 aufweist.

Zur selbsttätigen Rückstellung des Blinkerschalters wird bei der Erfindung also nicht das Rastelement entgegen der Vorspannkraft zurückgezogen, sondern statt dessen wird dem Rastelement "der Weg geebnet", den das Rastelement von der Einschaltstellung in die neutrale Mittelstellung zurücklegen muss. Die Kräfte, welche für die Bewegung des Sperrabschnittes erforderlich sind, sind viel geringer als jene beim Stand der Technik, die für die Bewegung des Rastelements entgegen der Federkraft aufgebracht werden müssen. Theoretisch muss nur die Reibungskraft zwischen dem Sperrabschnitt und dem Rastelement überwunden werden. Somit sind die Verformungen, denen die Rückstellvorrichtung und der mit ihr verbundene Träger bei einer Betätigung aus einer der beiden Einschaltstellungen in die neutrale Mittelstellung unterworfen sind, nur sehr gering, was die Messgenauigkeit eines an dem gleichen Träger angeordneten Lenkwinkelsensors erheblich verbessert.

Durch das erfindungsgemäße Umlenkelement kann zum einen auf einfache Art und Weise die Bewegungsrichtung des Auslösefingers so umgewandelt werden, dass der Sperrabschnitt in beliebigen sich z.B. aus der Einbausituation ergebenden Richtung bewegt werden kann. Zum anderen sind durch ein solches Umlenkelement entsprechende Hebelarme realisierbar, die eine Veränderung der Kräfte oder der Bewegungshübe ermöglichen.

Dabei weist das Umlenkelement in dem dem Sperrabschnitt zugewandten Bereich ein Langloch auf, dessen Längsachse gegenüber der Bewegungsrichtung des Sperrabschnitts angestellt ist, wobei der Sperrabschnitt mit einem Zapfen verbunden ist, der in das Langloch eingreift. Bei einem solchen Umlenkelement kann dessen Bewegung auf einfache Art und Weise in eine Bewegung des Sperrabschnitts übertragen werden.

Ein Beispiel für eine derartige kinematische Sperre des Sperrabschnittes besteht darin, dass die Längsachse des Langlochs geknickt ist und die Längsachse jenes Bereichs des Langlochs, in dem sich in der neutralen Mittelstellung der Zapfen des Sperrabschnitts befindet, im Wesentlichen in einem rechten Winkel zu einer Radiuslinie steht, die die Drehachse des Umlenkelements und den besagten Bereich schneidet.

Vorteilhafte Weiterbildungen der Erfindung sind in Unteransprüchen angegeben.

Ein einfach zu realisierender Sperrabschnitt ist bei einer Weiterbildung der Erfindung an einem türartig verschwenkbaren Teil gebildet. Alternativ hierzu kann der Sperrabschnitt auch an einem linear verschieblichen Teil gebildet sein.

Weiterhin besonders bevorzugt ist jene Weiterbildung, bei der der Sperrabschnitt in seiner Sperrstellung kinematisch verriegelt ist. Eine solche kinematische Verriegelung kommt ohne Federelement aus, dessen Beaufschlagungskraft bei der Bewegung des Sperrabschnittes überwunden werden müsste. Die Bewegung des Sperrabschnitts in eine Position, in der das Rastelement freigegeben ist, ist bei einer solchermaßen ausgebildeten Rückstellvorrichtung auf besonders kraftarme Art und Weise möglich.

In der neutralen Mittelstellung des Blinkerschalters befindet sich der Sperrabschnitt in einer Position, durch die das Rastelement in seiner Mittelstellung verrastet.

Durch die besagte geometrische Anordnung können in dieser neutralen Mittelstellung durch den Sperrabschnitt nur solche Kräfte an das Umlenkelement übertragen werden, deren Wirklinie durch die Drehachse des Umlenkelements geht. Der entsprechende Hebelarm ist aber gleich Null, so dass durch eine Beaufschlagung des Sperrabschnitts das Umlenkelement nicht bewegt werden kann und der Sperrabschnitt verriegelt bleibt. Erst durch eine Bewegung des Umlenkelements wird der Zapfen des Sperrabschnitts in den anderen Bereich des Langlochs gebracht, in dem die Verriegelung dann aufgehoben ist.

Eine Alternative zu dem angestellten Langloch ist bei jener Weiterbildung genannt, bei der das Umlenkelement in seinem dem Sperrabschnitt zugewandten Abschnitt eine gestufte Langöffnung aufweist, in die ein mit dem Sperrabschnitt verbundener Zapfen eingreift. Eine solche Ausbildung bietet sich insbesondere dann an, wenn der Sperrabschnitt an einem linear verschieblichen Teil gebildet ist.

Die erfindungsgemäße Rückstellvorrichtung kann mindestens ein Spannelement umfassen, welches das Umlenkelement in seine neutrale Mittelstellung beaufschlagt. Im Zusammenspiel mit einer rein kinematischen Verriegelung des Sperrabschnittes wird die für die Betätigung des Auslösefingers erforderliche Kraft im Wesentlichen durch die Spannkraft dieses Spannelementes vorgegeben. Da diese sehr gering sein kann, ist entsprechend auch nur eine geringe Betätigungskraft erforderlich.

Dabei kann das Spannelement eine Spiral-Druckfeder umfassen, deren eines Ende in einer Hülse mit einem geschlossenen Ende aufgenommen ist, welches abgerundet oder halbkugelförmig ausgebildet ist, wobei das geschlossene Ende der Hülse vorzugsweise in einer entsprechenden Einsenkung im Gehäuse aufgenommen ist. Bei dieser Weiterbildung kann sich die Spiral-Druckfeder entsprechend der Stellung des Umlenkelements ausrichten. Die Einsenkung ist dabei vorzugsweise ebenfalls abgerundet und so bemessen, dass eine entsprechende Schwenkbewegung der Hülse und hiermit der Spiral-Druckfeder möglich ist.

Um den Angriff des Spannelements am Umlenkelement zu verbessern, wird erfindungsgemäß ferner vorgeschlagen, dass an dem Umlenkelement ein zapfenartiger Ansatz, den das Spannelement an seinem freien Ende umgreift, oder eine Ausnehmung vorhanden ist, in die das Spannelement eingreift.

Zur Sicherung des Auslösefingers gegen ein Verkippen kann ferner mindestens ein Stützflügel am Auslösefinger vorgesehen sein, mit dem er sich am Umlenkelement abstützt.

In Weiterbildung der Erfindung umfasst das Gehäuse ein Wandelement, in dem ein sich parallel zur Längsachse des Auslösefingers erstreckender Führungsschlitz vorhanden ist, in den ein Führungszapfen des Auslösefingers eingreift und/oder mindestens ein Führungsschlitz vorhanden ist, in den ein Führungszapfen eingreift, der an einem Abschnitt des Umlenkelements angeordnet ist. Durch derartige Führungsschlitze werden der Auslösefinger und/oder das Umlenkelement geführt, so dass die Bewegung der entsprechenden Elemente mit noch größerer Genauigkeit erfolgt.

Dabei kann der Führungsschlitz einen Anschlag für den Bewegungsweg des Auslösefingers bzw. des Umlenkhebels umfassen. Mit einem solchen Anschlag kann z.B. die maximale lineare Bewegung des Auslösefingers, mit der dieser sich aus dem Gehäuse herausbewegt, begrenzt werden. In gleicher Weise können auch die Endstellungen des Umlenkhebels auf einfache Weise definiert werden.

Die Kräfte, die erforderlich sind, um das Schaltstück von seiner neutralen Mittelstellung in eine der Einschaltstellungen zu bewegen, können dann reduziert werden, wenn das Rastelement an seinem dem Rastprofil zugewandten Ende eine drehbare Walze aufweist. Es versteht sich, dass anstelle einer Walze auch eine Kugel oder ein ähnliches Element vorgesehen werden kann, welches bei der Bewegung des Rastelements längs des Rastprofils reibungsarm an diesem abrollt. Auch der Verschleiß einerseits am Rastprofil und andererseits am Rastelement im Bereich der Kontaktflächen wird durch diese Maßnahme verringert.

Weiterhin kann vorgesehen sein, dass das Rastprofil einen Rückstellabschnitt aufweist, in dem eine Stufe vorhanden ist, welche beim Betätigen in die Einschaltstellung vom Rastelement überwunden werden muss. Durch eine solche Stufe wird eine definierte Rastposition geschaffen, die beim Einrasten des Blinkerschalters vom Benutzer erfühlt werden kann.

Besonders bevorzugt ist jene Weiterbildung der Erfindung, bei der Sperrabschnitt eine abgerundete und/oder abgeflachte Sperrkante aufweist. Durch eine derartig ausgebildete Sperrkante wird in der Einschaltstellung des Blinkerschalters, wenn das Rastelement also vom Sperrabschnitt gesperrt ist, eine definierte Kontaktstelle zwischen dem Rastelement einerseits und dem Sperrabschnitt andererseits geschaffen.

Der Auslösefinger kann erfindungsgemäß auch an einem vorgespannten Zwischenstück anliegen und im Kontaktbereich einen Vorsprung aufweisen, der eine Ausnehmung im Zwischenstück mit Spiel hintergreift. Hierdurch kann das Zwischenstück am Auslösefinger vormontiert und vorgespannt werden, ohne dass die Gefahr besteht, dass es sich aufgrund der Vorspannung aus der Montagestellung herausdreht. Hierdurch wird die Montage der Rückstellvorrichtung erheblich erleichtert.

In eine ähnliche Richtung geht jene Weiterbildung, bei der der Sperrabschnitt mit einem pilzartigen Ansatz verbunden ist, der eine entsprechende Ausnehmung im Gehäuse mit etwas Spiel hintergreift. Auch dieser pilzartige Ansatz dient insoweit einer erleichterten Montage, als der Sperrabschnitt am Gehäuse vormontiert werden kann, ohne dass ein Herausfallen während der Montage der weiteren Teile zu befürchten ist.

Schließlich ist noch besonders bevorzugt, wenn der Auslösefinger einen Steuerkörper umfasst, der eine insgesamt im Wesentlichen rechteckige Außenkontur aufweist. Durch einen solchen Betätigungsabschnitt wird vor allem im Zusammenspiel mit einem Umlenkelement, auf das der Steuerkörper wirkt, ein maximaler Bewegungsweg des beaufschlagten Teiles ermöglicht.

Nachfolgend werden zwei Ausführungsbeispiele der Erfindung unter Bezugnahme auf die beiliegende Zeichnung im Detail erläutert. In der Zeichnung zeigen:
- Figur 1: eine Draufsicht auf ein erstes Ausführungsbeispiel einer Rückstellvorrichtung in ihrer neutralen Mittelstellung;
- Figur 2: eine Draufsicht auf die Rückstellvorrichtung von Figur 1 in einer ihrer Einschaltstellungen;
- Figur 3: eine Draufsicht auf die Rückstellvorrichtung von Figur 1 während der selbsttätigen Rückstellung von der Einschaltstellung in die neutrale Mittelstellung;
- Figur 4: eine perspektivische Darstellung des Auslösefingers und eines Zwischenstücks der Rückstellvorrichtung von Figur 1;
- Figur 5: eine perspektivische Darstellung eines Gehäuseteils mit einem Rastprofil und zweier Sperrabschnitte der Rückstellvorrichtung von Figur 1;
- Figur 6: eine perspektivische Darstellung einiger Komponenten der Rückstellvorrichtung von Figur 1 im zusammengebauten Zustand;
- Figur 7: eine perspektivische Darstellung eines Schaltstücks der Rückstellvorrichtung von Figur 1;
- Figur 8: eine perspektivische Ansicht von unten mehrerer Gehäuseteile der Rückstellvorrichtung von Figur 1;
- Figur 9: eine Prinzipskizze eines zweiten Ausführungsbeispiels einer Rückstellvorrichtung in deren neutraler Mittelstellung;
- Figur 10: die Rückstellvorrichtung von Figur 9 während der selbsttätigen Rückstellung von einer Einschaltstellung in ihre neutrale Mittelstellung; und
- Figur 11: eine detaillierte Draufsicht auf die Rückstellvorrichtung von Figur 9.

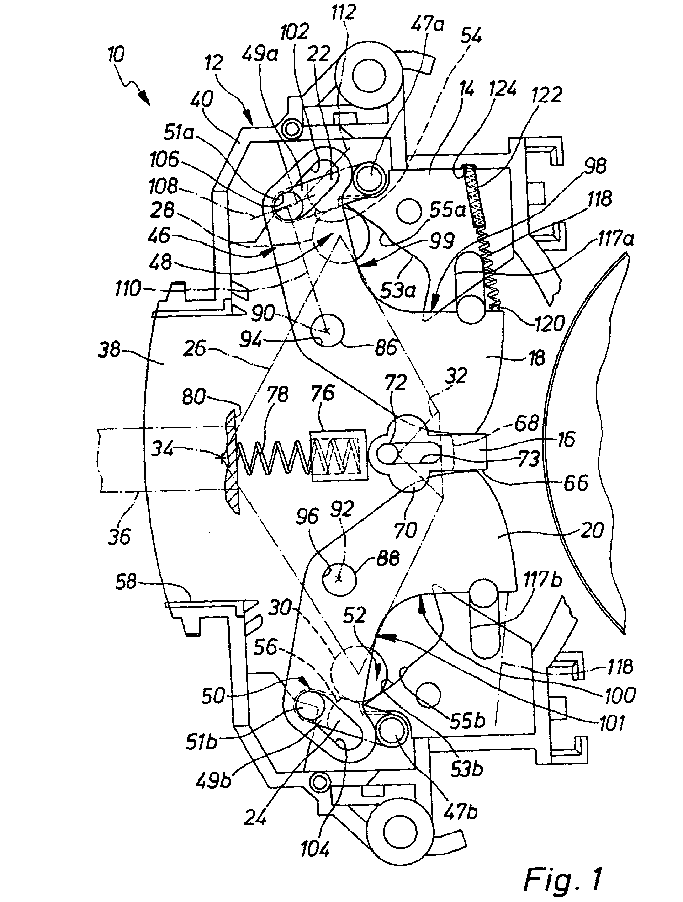

In Figur 1 trägt eine Rückstellvorrichtung für einen Blinkerschalter in einem Kraftfahrzeug insgesamt das Bezugszeichen 10. Sie umfasst zunächst ein Gehäuseteil 12 mit einem Rastprofileinsatz 14, einen Auslösefinger 16, zwei Umlenkelemente 18 und 20, zwei Sperrtüren 22 und 24 und ein Schaltstück 26, von dem aus Gründen der besseren Darstellung jedoch nur Walzen 28 und 30 weiters nicht mehr dargestellter Rastelemente, ein dreieckiges Sperrteil 32 sowie ein Drehpunkt 34 dargestellt sind. Das Schaltstück 26 ist hier nur symbolisch durch strichpunktierte Linien angedeutet, mit denen die Walzen 28 und 30, das dreieckige Sperrteil 32 und der Drehpunkt 34 miteinander verbunden sind. Ein ebenfalls nur strichpunktiert angedeuteter Blinkerhebel trägt insgesamt das Bezugszeichen 36.

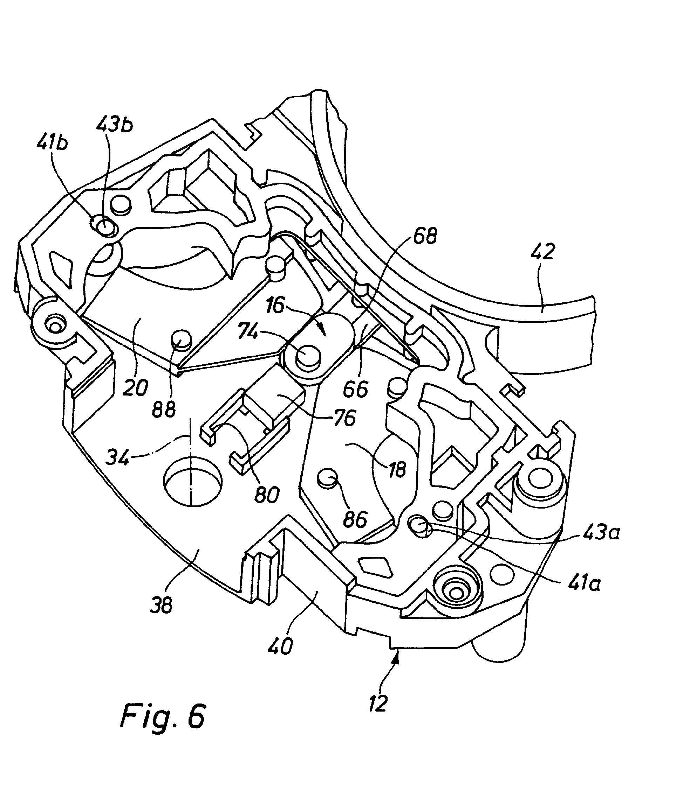

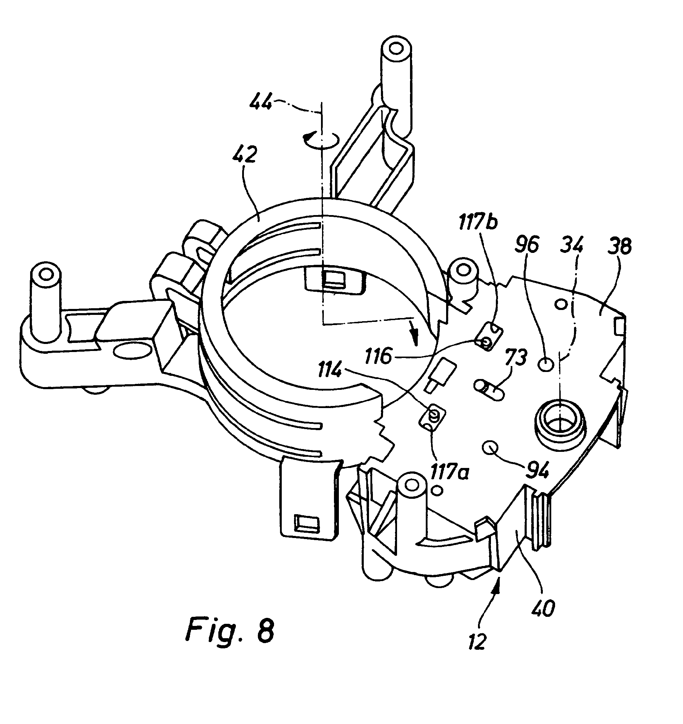

Das Gehäuseteil 12 umfasst einen in Figur 1 transparent dargestellten Boden 38 und eine auf diesem senkrecht stehende Wand 40. Im Detail ist der Boden in Figur 8 gezeigt. An die Wand 40 ist ferner ein Träger 42 angeformt, der in der Art einer Manschette koaxial zu einer Achse einer nur strichpunktiert dargestellten Lenkspindel ausgebildet ist (vergl. insbesondere Figuren 6 und 8).

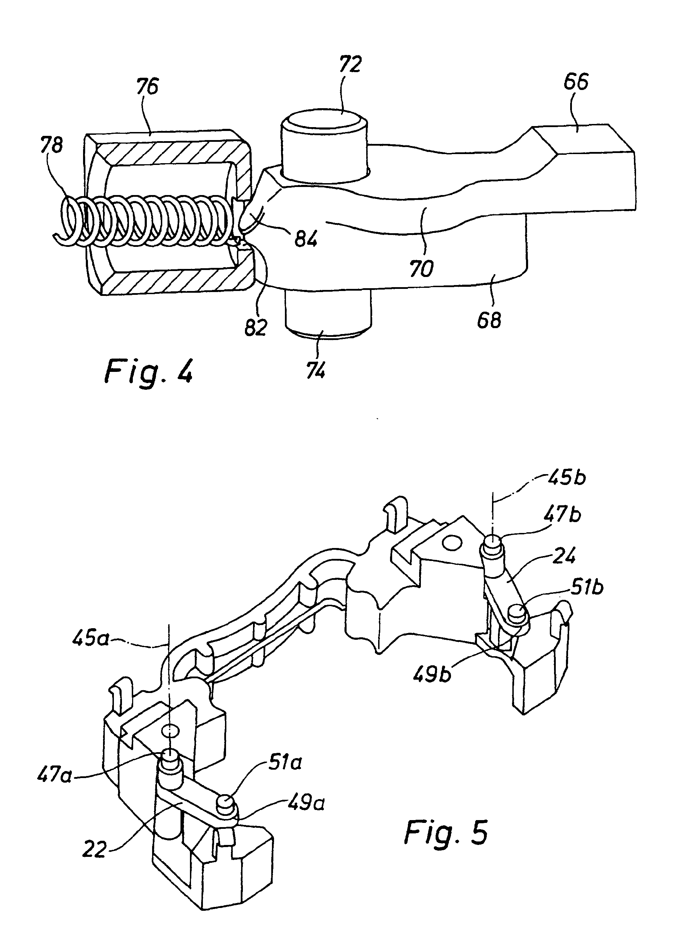

Der Rastprofileinsatz 14 ist in das Gehäuseteil 12 innerhalb der Wand 40 eingesetzt. Seine genaue Ausbildung ist in Figur 5 dargestellt. Die Sperrtüren 22 und 24 sind in einer Ausnehmung des Rastprofileinsatzes 14 angeordnet und über in der Zeichnung nicht sichtbare untere Scharnierzapfen in entsprechenden Ausnehmungen des Rastprofileinsatzes 14 um Achsen 45a und 45b schwenkbar gelagert. Die sichtbaren oberen Scharnierzapfen 47a und 47 b greifen in entsprechende Ausnehmungen (ohne Bezugszeichen) im Boden 38. An einem Hebelarm 49a bzw. 49b trägt jede Sperrtüre 22 bzw. 24 einen Steuerzapfen 51a bzw. 51b, der mit dem Umlenkelement 18 bzw. 20 in noch zu erläuternder Art und Weise zusammenarbeitet. Um die Sperrtüren 22, 24 bei der Montage gegen Herausfallen zu sichern, ist an ihre Unterseite ein pilzartiger Ansatz 43a, 43 b angeformt, der eine entsprechende längliche Ausnehmung 41a, 41b im Rastprofileinsatz 14 mit etwas Spiel hintergreift (vergl. Figur 6).

In der in den Figuren 1 und 5 dargestellten Position der Sperrtüren 22 und 24 sind in dem Rastprofileinsatz 14 zwei obere Rast-Einsenkungen 46 und 48 bzw. zwei untere Rast-Einsenkungen 50 und 52 gebildet. Die Sperrtüren 22 und 24 tragen parallel zu ihrer jeweiligen Schwenkachse einen Sperrabschnitt 54 bzw, 56, durch den die entsprechenden Rast-Einsenkungen 46 und 48 bzw. 50 und 52 voneinander getrennt sind. Der Rastprofileinsatz umfasst weiters zwei Rückstellabschnitte 53a und 53b, in denen jeweils eine Stufe 55a, 55b vorhanden ist.

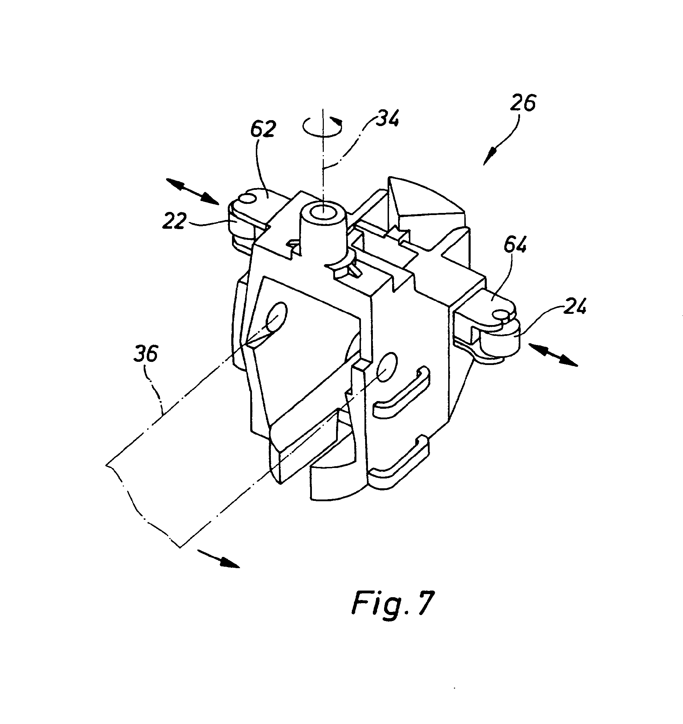

Auf der in Figur 1 linken Seite zeigt das Gehäuseteil 12 eine Öffnung 58, durch die sich der Blinkerhebel 36 hindurch erstreckt. Während das Schaltstück 26 und die entsprechenden Rastelemente, in den Figuren 1 bis 3 nur symbolisch durch eine strichpunktierte Linie angedeutet sind, kann die genaue Ausgestaltung des Schaltstücks 26 aus Figur 7 entnommen werden. In dieser sind auch Rastelemente 62 und 64 dargestellt, die in dem Schaltstück 26 geführt sind. In der in Figur 1 dargestellten neutralen Mittelstellung erstrecken sich die Rastelemente 62 und 64 von der Mitte nach unten bis in die Rast-Einsenkung 52 bzw. senkrecht nach oben in die Rast-Einsenkung 46. Die radial innen liegenden Abschnitte der beiden Rastelemente 62 und 64 sind hohl ausgeführt und in ihnen ist eine Spiral-Druckfeder (nicht dargestellt) angeordnet, durch die die beiden Walzen 28 und 30 der Rastelemente 62 und 64 gegen den Rastprofileinsatz 14 bzw. die Sperrtüren 22 und 24 beaufschlagt werden.

Der im Detail insbesondere in Figur 4 dargestellte Auslösefinger 16 verfügt über einen in Einbaulage zur Achse 44 der Lenkspindel hin ausgerichteten Mitnehmer 66, der in der in Figur 1 dargestellten Mittelstellung der Rückstellvorrichtung 10 in einer zurückgezogenen Position angeordnet ist. Der Mitnehmer 66 ist an einen Steuerkörper 68 angeformt, der in der Draufsicht eine im Wesentlichen längliche Form hat. An den Steuerkörper 68 sind seitliche Stützflügel 70 angeformt. An dem dem Mitnehmer 66 abgewandten Ende des Steuerkörpers 68 ist an dessen Oberseite ein Führungszapfen 72 und an dessen Unterseite ein Anschlagzapfen 74 angeformt. Der Führungszapfen 72 greift in einen Führungsschlitz 73 im Boden 38 des Gehäuses 12.

Das vom Mitnehmer 66 abgelegene Ende des Steuerkörpers 68 ist abgerundet ausgeführt und liegt an einer Stirnseite eines zylindrischen Zwischenstücks 76 an. Das vom Auslösefinger 16 abgewandte Ende des Zwischenstücks 76 ist offen. In dem Zwischenstück 76 ist eine Spiral-Druckfeder 78 geführt, die sich einerseits an dem dem Auslösefinger 16 zugewandten Ende des Zwischenstücks 76 und andererseits an einem in den Figuren nur symbolisch dargestellten, gehäusefesten Stützelement 80 abstützt. In der dem Auslösefinger 16 zugewandten Stirnwand des Zwischenstücks 76 ist eine Ausnehmung 82 vorhanden, die ein an den Steuerkörper 68 angeformter hakenförmiger Zapfen 84 mit einer Einführschräge mit Spiel hintergreift. Auf diese Weise kann das Zwischenstück 76 am Auslösefinger 16 vormontiert werden, was die Montage der Rückstellvorrichtung 10 erleichtert.

Die beiden Umlenkelemente 18 und 20 haben jeweils die Form eines flachen Kniehebels mit jeweils einem ersten Hebelabschnitt 98 bzw. 100 und einem zweiten Hebelabschnitt 99 bzw. 101. Durch einen Zapfen 86 bzw. 88 wird jeweils eine Schwenkachse 90 bzw. 92 vorgegeben. Die Schwenkzapfen 86 bzw. 88 sind in entsprechenden Ausnehmungen 94 bzw. 96 im Boden 38 des Gehäuseteils 12 aufgenommen (vergl. Figur 8).

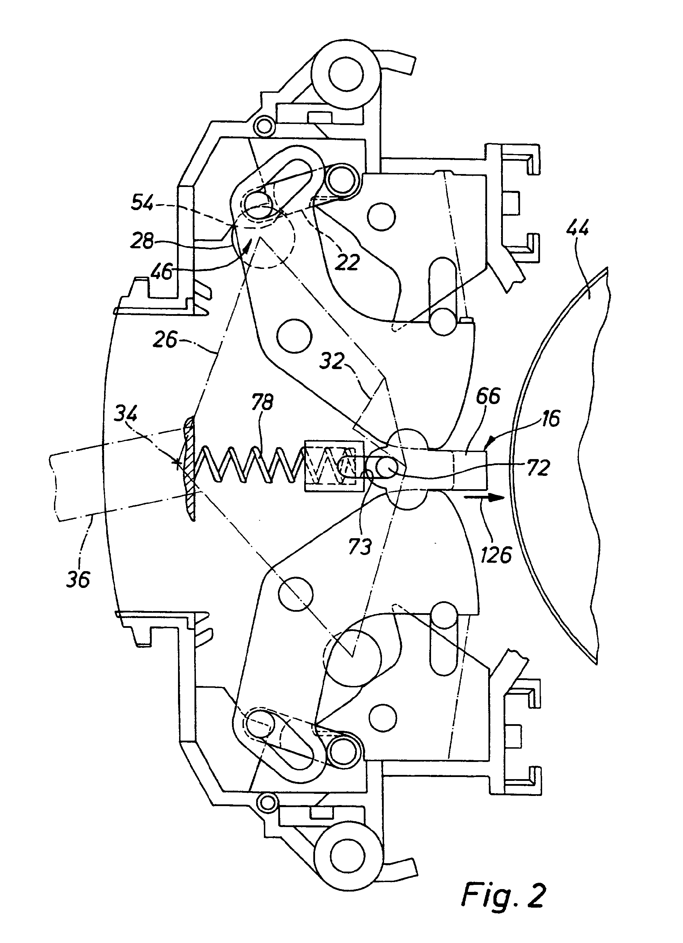

Am der jeweiligen Sperrtüre 22 bzw. 24 zugewandten Ende des zweiten Hebelabschnitts 99 bzw. 101 des Umlenkelements 18 bzw. 20 ist jeweils ein Langloch 102 bzw. 104 vorhanden, welches zwei in einem Winkel zueinander stehende Abschnitte aufweist. Die Längsachse jenes Bereichs des Langlochs 102 bzw. 104, in dem sich in der neutralen Mittelstellung der Rückstellvorrichtung 10 der Steuerzapfen der Sperrtüre 22 bzw. 24 befindet (dies ist in den Figuren 1 und 2 dargestellt), steht in einem rechten Winkel zu einer Radiuslinie, die die Drehachse 90 bzw. 92 des Umlenkelements 102 bzw. 104 und den besagten Bereich schneidet. Die entsprechenden Bezugszeichen sind in Figur 1 nur für das obere Umlenkelement 18 angegeben. Der entsprechende Bereich des Langlochs 102 trägt das Bezugzeichen 106, seine Längsachse das Bezugszeichen 108 und die Radiuslinie das Bezugszeichen 110. Der andere Bereich des jeweiligen Langlochs 102 bzw. 104 ist so ausgebildet, dass seine Längsachse gegenüber der Bewegungsrichtung des jeweiligen Sperrabschnitts 54 bzw. 56 angestellt ist.

Die Längsachse des entsprechenden Bereichs des oberen Langlochs 102 trägt das Bezugszeichen 112. In den Langlöchern 102 bzw. 104 sind die Steuerzapfen 51a bzw. 51b der Sperrtüren 22 bzw. 24 gleitend aufgenommen. An dem dem Auslösefinger 16 zugewandten ersten Hebelabschnitt 98 bzw. 100 ist auf der vom Auslösefinger 16 abgewandten Seite jeweils ein Führungszapfen 114 bzw. 116 angeformt, der in entsprechende Führungsschlitze 117a, 117b im Boden 38 des Gehäuseteils 12 im Gleitspiel eingreift.

Zwischen dem ersten Hebelabschnitt 98 bzw. 100 des Umlenkelements 18 bzw. 20 und der oberen bzw. unteren Wand 40 des Gehäuseteils 12 ist eine Spiral-Druckfeder 118 gespannt. Diese ist detailliert nur im oberen Bereich von Figur 1 dargestellt und ansonsten nur durch eine strichpunktierte Linie angedeutet. Am einen Ende umgreift die Spiral-Druckfeder 118 einen an den Hebel 98 angeformten Ansatz 120. Am anderen Ende ist sie in einer Hülse 122 aufgenommen, deren geschlossenes Ende halbkugelförmig ausgebildet ist. Dieses geschlossene Ende ist wiederum in einer Einsenkung 124 in der Wand 40 des Gehäuseteils 12 aufgenommen.

Durch die Spiral-Druckfeder 118 wird der Hebelabschnitt 98 bzw. 100 zum Auslösefinger 16 hin beaufschlagt. Die Führungsschlitze 117a und 117b sind jedoch so bemessen und angeordnet, dass sie einen Anschlag bilden und in der in den Figuren 1 und 2 dargestellten Situation jeweils ein Spalt zwischen Steuerkörper 68 des Auslösefingers 16 und den Umlenkhebeln 18 bzw. 20 verbleibt.

Die Funktion der Rückstellvorrichtung 10 wird nun insbesondere anhand der Figuren 1 - 3 erläutert:

In der in Figur 1 dargestellten neutralen Mittelstellung liegen die Führungszapfen 114 bzw. 116 der Umlenkelemente 18 bzw. 20 an den inneren Enden der Führungsschlitze 117a bzw. 117b an. Somit befinden sich die zweiten Hebelabschnitte 99 bzw. 101 der Umlenkelemente 18 und 20 in einer der Wand 40 des Gehäuseteils 12 benachbarten Position. Die Steuerzapfen 51a bzw. 51b an den Vorsprüngen 49a bzw. 49b der Sperrtüren 22 und 24 liegen in den Sperrbereichen 106 der beiden Langlöcher 102 und 104. In dieser Position sind die beiden Sperrtüren 22 und 24 kinematisch verriegelt und so nach innen verschwenkt, dass die beiden Sperrabschnitte 54 und 56 der Sperrtüren 22 und 24 einen erhabenen Abschnitt innerhalb der Profilkontur des Rastprofileinsatzes 14 bilden.

Die beiden Walzen 28 und 30 der Rastelemente 62 und 64 liegen in den so gebildeten Rasteinsenkungen 48 bzw. 52. Hierdurch ist der Blinkerhebel 36 in der in Figur 1 dargestellten horizontalen Position verriegelt. Das dreieckige Sperrteil 32, welches Bestandteil des Schaltstücks 26 ist, befindet sich in einer in vertikaler Richtung gesehenen Mittelstellung in etwa auf der Mittelachse der Öffnung 58.

An der Spitze des dreieckigen Sperrteils 32 liegt der Anschlagzapfen 74 des Auslösefingers 16 an. In diese Position wird der Auslösefinger 16 durch die Spiral-Druckfeder 78 und das Zwischenstück 76 gedrückt, welches am Auslösefinger 16 anliegt. Eine Bewegung des Auslösefingers 16 in Figur 1 nach rechts, also zur Lenkspindel 44 hin, entsprechend der Beaufschlagungsrichtung durch die Spiral-Druckfeder 78, wird also durch das dreieckige Sperrteil 32 verhindert.

Wird nun vom Benutzer der Blinkerhebel 36 nach unten gedrückt, verschwenkt auch das Schaltstück 26 um den Drehpunkt 34. Die Walze 28 des Rastelements 62 wird dabei durch die ansteigende Sperrtüre 22 entgegen der Federkraft der nicht dargestellten Spiral-Druckfeder bewegt, die zwischen den beiden Rastelementen 62 und 64 angeordnet ist. Hat die Walze 28 des Rastelements 62 den Sperrabschnitt 54 der Sperrtüre 22 überwunden, wird es durch die Kraft dieser Spiral-Druckfeder in die Rasteinsenkung 46 gedrückt, welche auf der rechten Seite vom Sperrabschnitt 54 begrenzt ist.

Diese Stellung des Schaltstücks 26 ist in Figur 2 dargestellt.

Durch die Drehbewegung des Schaltstücks 26 bewegt sich auch das dreieckige Sperrteil 32 nach oben, so dass der Anschlagzapfen 74 des Auslösefingers 16 von der Spitze des dreieckigen Sperrteils 32 freikommt, an dessen Seitenfläche entlanggleitet und so der Auslösefinger 16 entsprechend der Beaufschlagungsrichtung durch die Spiral-Druckfeder 78 in Richtung des Pfeiles 126 ausrückt. Diese Ausrückbewegung endet dann, wenn der am Auslösefinger 16 vorhandene Führungszapfen 72 am in Figur 2 rechten Ende des Führungsschlitzes 73 im Boden 38 des Gehäuseteils 12 anliegt. In dieser in Figur 2 dargestellten Position steht der Mitnehmer 66 des Auslösefingers 16 deutlich in Richtung auf die Lenkspindel 44 vor.

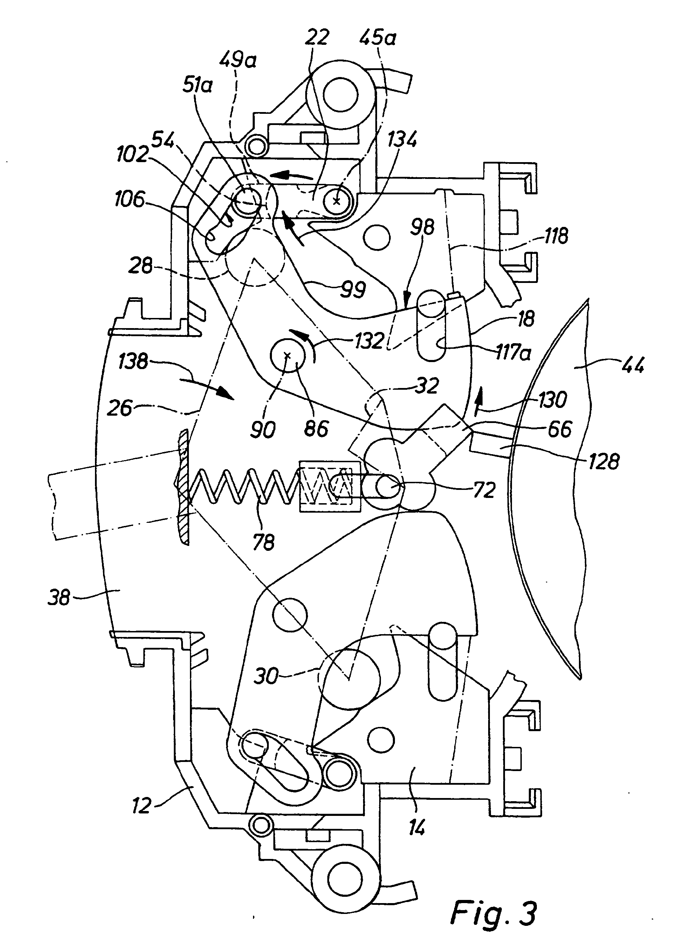

Bei einer Drehung eines in der Figur nicht dargestellten Lenkrads wird auch die Lenkspindel 44 in eine entsprechende Drehung versetzt. Mit der Lenkspindel ist ein Nocken 128 verbunden. Aufgrund der Drehbewegung drückt der Nocken 128 den Mitnehmer 66 des Auslösefingers 16 in Richtung des Pfeiles 130 (vergl. Figur 3). Hierdurch verschwenkt der Auslösefinger 16 insgesamt um eine Achse, die parallel zur Achse der Lenkspindel 44 verläuft und durch den Führungszapfen 72 vorgegeben ist. Aufgrund dieser Schwenkbewegung des Auslösefingers 16 drückt der Steuerkörper 68 gegen den ersten Hebelabschnitt 98 des Umlenkelements 18, wodurch dieser um die durch den Schwenkzapfen 86 vorgegebene Drehachse 90 in Richtung des Pfeiles 132 entgegen der Beaufschlagungsrichtung der Spiral-Druckfeder 118 verschwenkt.

Durch diese Schwenkbewegung verschwenkt auch der zweite Hebelabschnitt 99 des Umlenkelements 18 in Richtung des Pfeiles 134. Dies bewirkt wiederum, dass der Steuerzapfen 51a am Fortsatz 49a der Sperrtüre 22 aus dem Sperrbereich 106 des Langlochs 102 herausgleitet und sich bis zum in Figur 3 oberen Ende des Langlochs 102 bewegt. Der maximale Schwenkwinkel des Umlenkelements 18 wird einerseits durch den Führungsschlitz 117a im Boden 38 des Gehäuseteils 12 und andererseits durch die Länge des Langlochs 102 begrenzt.

Durch die Gleitbewegung des Steuerzapfens 51a der Sperrtüre 22 im Langloch 102 wird die Sperrtüre 22 um die Schwenkachse 45a verschwenkt, bis diese in der in Figur 3 dargestellten im Wesentlichen horizontalen Position zum Liegen kommt. In dieser Position ist der Sperrabschnitt 54 der Sperrtüre 22 vollständig zurückgezogen, so dass die beiden Rasteinsenkungen 46 und 48 nicht mehr vorhanden sind. Die Walze 28 des Rastelements 62 wird also nicht mehr durch den Sperrabschnitt 54 gesperrt.

Da die in Figur 3 untere Walze 30 des unteren Rastelements 64 durch die Spiral-Druckfeder in einem schrägen Winkel gegen die Wand des Rastprofileinsatzes 14 gedrückt wird, verschwenkt das Schaltstück 26 in Richtung des Pfeiles 138 wieder in seine in Figur 1 dargestellte Ausgangsstellung. Dabei wird der Anschlagzapfen 74 des Auslösefingers 16 durch die Seitenfläche des dreieckigen Sperrteils 32 wieder entgegen der Beaufschlagungsrichtung durch die Spiral-Druckfeder 78 in Figur 3 nach links gedrückt, so dass der Mitnehmer 66 des Auslösefingers 16 wieder in seine zurückgezogene Position einrückt.

Sobald der Nocken 128 den Mitnehmer 66 des Auslösefingers 16 wieder freigibt, verschwenkt dieser aufgrund der Federbeaufschlagung durch die Spiral-Druckfeder 118, die über den ersten Hebelabschnitt 98 des Umlenkelements 18 übertragen wird, um die durch den Führungszapfen 72 vorgegebene Achse wieder in seine in Figur 1 dargestellte neutrale Mittelstellung. Entsprechend verschwenkt auch der erste Hebelabschnitt 98 des Umlenkelements 18 und mit ihm der zweite Hebelabschnitt 99, in dem das Langloch 102 vorhanden ist, wodurch sich die Sperrtüre 22 und mit ihr der Sperrabschnitt 54 wieder in die in Figur 1 dargestellte Stellung bewegen, in der links und rechts vom Sperrabschnitt 54 jeweils Rasteinsenkungen 46 und 48 gebildet sind.

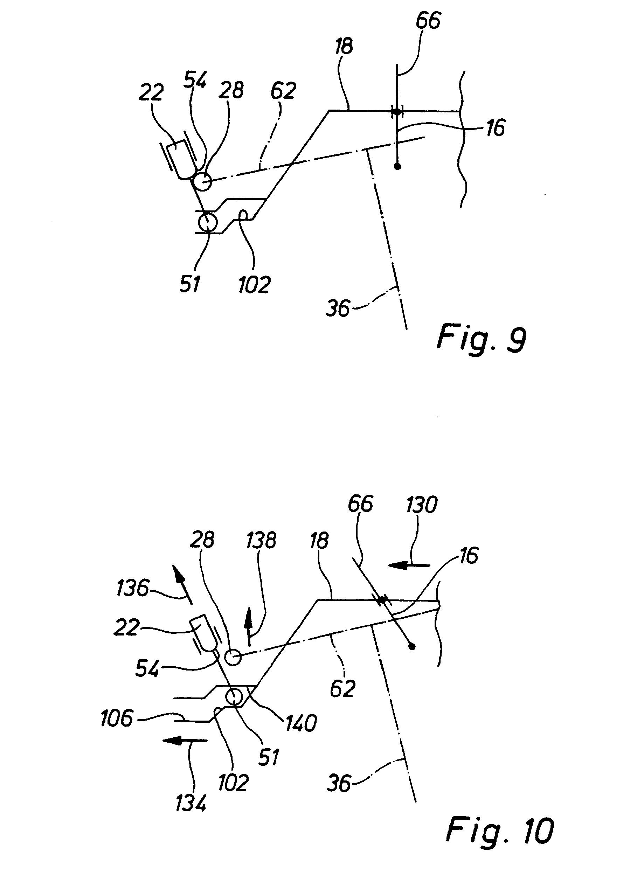

Nun wird unter Bezugnahme auf die Figuren 9 - 11 ein zweites Ausführungsbeispiel einer Rückstellvorrichtung 10 erläutert. Solche Teile, welche zum ersten Ausführungsbeispiel äquivalente Funktionen aufweisen, tragen die gleichen Bezugszeichen und sind evtl. nicht nochmals im Detail erläutert.

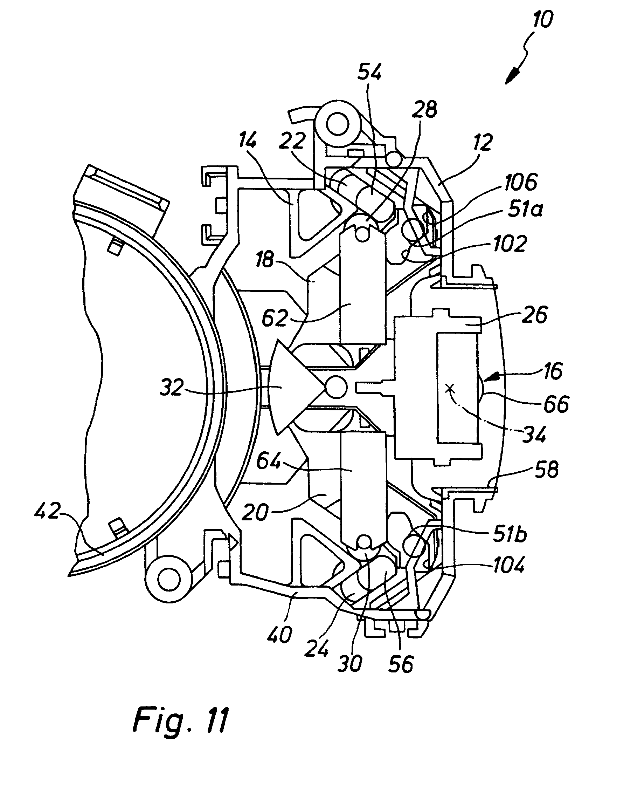

In den beiden rein schematischen Darstellungen der Figuren 9 und 10 ist im Umlenkelement 18 kein geknicktes, sondern ein stufenförmiges Langloch 102 vorhanden. Anstelle einer schwenkbaren Sperrtüre ist ein linear verschiebliches Sperrelement 22 vorgesehen, welches mit einem Steuerzapfen verbunden ist, der in dem stufenförmigen Langloch 102 gleitend aufgenommen ist. Wie aus Figur 10 ersichtlich ist, verschiebt sich das Umlenkelement 18 bei einer Beaufschlagung des Mitnehmers 66 des Auslösefingers 16 nach links, wodurch der Führungszapfen des Sperrelements 22 in dem Langloch 102 von einer Sperrstufe 106 in eine Öffnungsstufe 140 gleitet. Dies hat zur Folge, dass sich das Sperrelement 22 in Richtung des Pfeiles 136 bewegt und hierdurch die Walze 28 des Rastelements 62 freigibt. Somit kann sich die Walze 28 in Richtung des Pfeiles 138 bewegen und der Blinkerhebel 36 in seine in Figur 11 gezeigte neutrale Mittelstellung zurückkehren.

## Patentansprüche

1. Rückstellvorrichtung für einen Blinkerschalter in Kraftfahrzeugen; welche die selbsttätige Rückstellung des Blinkerschalters aus einer der beiden Einschaltstellungen in die neutrale Mittelstellung bewirkt; welche ein Gehäuse (12) mit mindestens einem Rastprofil (14) aufweist; welche einen beweglichen, vorgespannten Auslösefinger (16) aufweist, der in den Einschaltstellungen so angeordnet ist, dass er von einem mit einer Lenkspindel (44) verbundenen Nocken (128) betätigt werden kann; und welche ein Schaltstück (26) aufweist, das schwenkbar und mit mindestens einem in das Rastprofil (14) eingreifenden vorgespannten Rastelement (62, 64) ausgestattet ist, wobei das Rastprofil (14) mindestens einen beweglichen Sperrabschnitt (54, 56) aufweist und der Auslösefinger (16) mit dem beweglichen Sperrabschnitt (54, 56) derart verbunden ist, dass der Sperrabschnitt (54, 56) das Rastelement (62, 64) freigibt, wenn der Auslösefinger (16) betätigt wird, **dadurch gekennzeichnet, dass** sie mindestens ein Umlenkelement (18, 20) umfaßt, das die Betätigungsbewegung des Auslösefingers (16) an den Sperrabschnitt (54, 56) überträgt, und das Umlenkelement (18, 20) in dem dem Sperrabschnitt (54, 56) zugewandten Bereich ein Langloch (102, 104) aufweist, dessen Längsachse (112, 106) gegenüber der Bewegungsrichtung (136) des Sperrabschnitts (54, 56) angestellt ist, und der Sperrabschnitt (54, 56) mit einem Zapfen (51a,51b) verbunden ist, der in das Langloch (102, 104) eingreift, wobei die Längsachse des Langlochs (102, 104) geknickt ist und die Längsachse (108) jenes Bereichs des Langlochs (102, 104), in dem sich in der neutralen Mittelstellung der Zapfen (51a,51b) des Sperrabschnitts (54, 56) befindet, im wesentlichen in einem rechten Winkel zu einer Radiuslinie (110) steht, die die Drehachse (90, 92) des Umlenkelements (18, 20) und den besagten Bereich schneidet.

2. Rückstellvorrichtung nach Anspruch 1, **dadurch gekennzeichnet, dass** der Sperrabschnitt (54, 56) an einem türartig verschwenkbaren Teil (22, 24) gebildet ist.

3. Rückstellvorrichtung nach einem der vorhergehenden Ansprüche, **dadurch gekennzeichnet, dass** der Sperrabschnitt (54, 56) in seiner Sperrstellung kinematisch verriegelt ist.

4. Rückstellvorrichtung nach einem der vorhergehenden Ansprüche, **dadurch gekennzeichnet, dass** das Umlenkelement (18) in seinem dem Sperrabschnitt (54) zugewandten Abschnitt eine gestufte Langöffnung (102) aufweist, in die ein mit dem Sperrabschnitt (54) verbundener zapfen (51a, 51b) eingreift.

5. Rückstellvorrichtung nach einem der vorhergehenden Ansprüche, **dadurch gekennzeichnet, dass** sie mindestens ein Spannelement (118) umfasst, welches das Umlenkelement (18, 20) in seine neutrale Mittelstellung beaufschlagt.

6. Rückstellvorrichtung nach Anspruch 5, **dadurch gekennzeichnet, dass** das Spannelement eine Spiral-Druckfeder (118) umfasst, deren eines Ende in einer Hülse (122) mit einem geschlossenen Ende aufgenommen ist, welches abgerundet oder halbkugelförmig ausgebildet ist, wobei das geschlossene Ende der Hülse (122) vorzugsweise in einer entsprechenden Einsenkung. (124) im Gehäuse (12) aufgenommen ist.

7. Rückstellvorrichtung nach einem der Ansprüche 5 oder 6, **dadurch gekennzeichnet, dass** an dem Umlenkelement (18) ein zapfenartiger Ansatz (120), den das Spannelement (118) an seinem freien Ende umgreift, oder eine Ausnehmung vorhanden ist, in die das Spannelement eingreift.

8. Rückstellvorrichtung nach einem der vorhergehenden Ansprüche, **dadurch gekennzeichnet, dass** der Auslösefinger (16) mindestens einen Stützflügel (70) aufweist, mit dem er sich am Umlenkelement (18, 20) abstützt.

9. Rückstellvorrichtung nach einem der vorhergehenden Ansprüche, **dadurch gekennzeichnet, dass** das Gehäuse (12) ein Wandelement (38) umfasst, in dem ein sich parallel zur Längsachse des Auslösefingers (16) erstreckender Führungsschlitz (73) vorhanden ist, in den ein Führungszapfen (72) des Auslösefingers eingreift (16), und/oder mindestens ein Führungsschlitz (117a, 117b) vorhanden ist, in den ein Führungszapfen (114, 116) eingreift, der an einem Abschnitt (98, 100) des Umlenkelements (18, 20) angeordnet ist.

10. Rückstellvorrichtung nach Anspruch 9, **dadurch gekennzeichnet, dass** der Führungsschlitz (73, 117a, 117b) einen Anschlag für den Bewegungsweg des Auslösefingers (16) bzw. des Umlenkhebels (18, 20) umfasst.

11. Rückstellvorrichtung nach einem der vorhergehenden Ansprüche, **dadurch gekennzeichnet, dass** das Rastelement (62, 64) an seinem dem Rastprofil (14) zugewandten Ende eine drehbare Walze (28, 30) aufweist.

12. Rückstellvorrichtung nach einem der vorhergehenden Ansprüche, **dadurch gekennzeichnet, dass** das Rastprofil (14) einen Rückstellabschnitt aufweist, in dem eine Stufe vorhanden ist, welche beim Betätigen in die Einschaltstellung vom Rastelement (64) überwunden werden muss.

13. Rückstellvorrichtung nach einem der vorhergehenden Ansprüche, **dadurch gekennzeichnet, dass** der Sperrabschnitt (54, 56) eine abgerundete und/oder abgeflachte Sperrkante aufweist.

14. Rückstellvorrichtung nach einem der vorhergehenden Ansprüche, **dadurch gekennzeichnet, dass** der Auslösefinger (16) an einem vorgespannten Zwischenstück (76) anliegt und im Kontaktbereich einen Vorsprung (84) aufweist, der eine Ausnehmung (82) im Zwischenstück (76) mit Spiel hintergreift.

15. Rückstellvorrichtung nach einem der vorhergehenden Ansprüche, **dadurch gekennzeichnet, dass** der Sperrabschnitt (54, 56) mit einem pilzartigen Ansatz verbunden ist, der eine entsprechende Ausnehmung im Gehäuse (40) mit etwas Spiel hintergreift.

16. Rückstellvorrichtung nach einem der vorhergehenden Ansprüche, **dadurch gekennzeichnet, dass** der Auslösefinger (16) einen Steuerkörper (68) umfasst, der eine insgesamt im wesentlichen rechteckige Außenkontur aufweist.

## Claims

1. A canceling device for a blinker switch in motor vehicles; which causes automatic return of the blinker switch from one of two switched positions into a neutral, central position; comprising: a casing (12) having at least one catch profile (14); a movable biased trigger finger (16), disposed in switched positions for actuation by a cam connected to the steering shaft (44); a switching piece (26) mounted for pivoting and having at least one biased catch element (62, 64) engaging in said catch profile (14), said catch profile (14) having at least one movable locking section (54, 56) and said trigger finger (16) is connected to said movable locking section (54, 56) such that said locking section (54, 56) releases said catch element (62 ,64) when said trigger finger (16), **characterized in that** said device comprises at least one deflecting element (18, 20) which transfers the actuating motion of said trigger finger (16) to said locking section (54, 56), wherein said deflecting element (18, 20) has a slot (10, 104) in the region facing said locking section (54, 56), said slot having a longitudinal axis (112, 106) disposed at an angle with respect to the direction (136) of motion of said locking section (54, 56), wherein said locking section (54, 56) is connected with a pin (51a, 51b) which engages said slot (102, 104), said the longitudinal axis of said slot (102, 104) is bent and the longitudinal axis (108) of said region of said slot (102, 104) bearing said pin (51a, 51b) of said locking section (54, 56) in a neutral central position is substantially perpendicular to a radius line (110) which intersects an axis (90, 92) of rotation of said deflecting element (18, 20) and said region.

2. The canceling device of claim 1, **characterized in that** said locking section (54, 56) is realized at a part (22, 24) which door-like pivotable.

3. The canceling device of one of the preceding claims, **characterized in that** said locking section (54, 56) is kinematically locked in its locking position.

4. The canceling device of one of the preceding claims, **characterized in that** said deflecting element (18) in its section facing said locking section (54) is provided with a stepped slot (102) engaged by a pin (51a, 51b) connected to the locking section (54).

5. The canceling device of one of the preceding claims, **characterized in that** it comprises at least one tensioning element (118) which biases said deflecting element (18, 20) into its neutral central.

6. The canceling device of claim 5, **characterized in that** said tensioning element comprises a helical pressure spring (118) whose one end is accommodated in a sleeve (122) having a closed end, which is rounded or hemispheric, and wherein said closed end of said sleeve (122) preferably is accommodated in a corresponding depression (124) in said casing (12).

7. The canceling device of claim 5 or 6, **characterized in that** said deflecting element (18) has either a pin-like projection (120) surrounded by said tensioning element (118) on its free end of or a recess into which said tensioning element engages.

8. The canceling device of one of the preceding claims, **characterized in that** said trigger finger (16) comprises at least one supporting wing (70) for supporting at said deflecting element (18, 20).

9. The canceling device of one of the preceding claims, **characterized in that** said casing (12) comprises a wall element (38) having a guiding slot (73) extending parallel to a longitudinal axis of said trigger finger (16), into which a guiding pin (72) of said trigger finger (16) engages and/or at least a guiding slot (117a, 117b) is provided into which a guiding pin engages, which is provided at a section of said deflecting element (18, 20) .

10. The canceling device of claim 9, **characterized in that** said guiding slot (73, 117a, 117b) is provided with a stop for the path of motion of said trigger finger (16) or said deflecting pivot (18, 20).

11. The canceling device of one of the preceding claims, **characterized in that** said catch element (62, 64) comprises a rotatable roller (28, 30) on its end facing said catch profile (14).

12. The canceling device of one of the preceding claims, **characterized in that** said catch profile (14) has a canceling section provided with a step which must be overcome during actuation into a switched position of said catch element (64).

13. The canceling device of one of the preceding claims, **characterized in that** said locking section (54, 56) has a rounded and/or flattened locking edge.

14. The canceling device of one of the preceding claims, **characterized in that** said trigger finger (16) contacts a biased intermediate part (76) and is provided with a projection (84) at the contacting region, said projection engages with play behind a recess (82) in said intermediate part (76).

15. The canceling device of one of the preceding claims, **characterized in that** locking section (54, 56) is connected with a mushroom-like shoulder which engages with some play behind a cooperating recess in said casing (40) .

16. The canceling device of one of the preceding claims, **characterized in that** said trigger finger (16) comprises a control body (68) having an overall substantially square outer contour.

## Revendications

1. Dispositif de rappel pour un commutateur de clignotant dans des véhicules automobiles ; lequel induit le rappel automatique du commutateur de clignotant hors de l'une des deux positions d'indication de direction dans la position médiane neutre ; lequel comporte un boîtier (12) avec au moins un profil d'arrêt (14) ; lequel comporte un doigt de déclenchement (16) mobile précontraint, qui, dans les positions d'indication de direction, est disposé de telle sorte qu'il peut être actionné par un ergot (128) relié à une broche de direction (44) ; et lequel comporte une pièce de commande (26) qui est apte à pivoter et est munie d'au moins un élément de blocage (62, 64) précontraint, s'engageant dans le profil d'arrêt (14), le profil d'arrêt (14) comportant au moins une partie de blocage (54, 56) mobile et le doigt de déclenchement (16) étant relié à la partie de blocage (54, 56) mobile, de telle sorte que la partie de blocage (54, 56) libère l'élément de blocage (62, 64) lorsque le doigt de déclenchement (16) est actionné, **caractérisé en ce que** ledit dispositif de rappel comporte au moins un élément de renvoi (18, 20), qui transmet le mouvement d'actionnement du doigt de déclenchement (16) vers la partie de blocage (54, 56), et l'élément de renvoi (18, 20) comporte, dans la zone orientée vers la partie de blocage (54, 56), un trou oblong (102, 104), dont l'axe longitudinal (112, 106) est réglé par rapport à la direction de mouvement (136) de la partie de blocage (54, 56), et la partie de blocage (54, 56) est reliée à un pivot (51a, 51b) qui s'engage dans le trou oblong (102, 104), l'axe longitudinal du trou oblong (102, 104) étant plié et l'axe longitudinal (108) de la zone du trou oblong (102, 104), dans laquelle, dans la position médiane neutre, se situe le pivot (51a, 51b) de la partie de blocage (54, 56), est disposé sensiblement à angle droit par rapport à une ligne de rayon (110) qui coupe l'axe de rotation (90, 92) de l'élément de renvoi (18, 20) et ladite zone.

2. Dispositif de rappel selon la revendication 1,
**caractérisé en ce que** la partie de blocage (54, 56) est formée sur une partie (22, 24) apte à pivoter à la manière d'une porte.

3. Dispositif de rappel selon l'une quelconque des revendications précédentes, **caractérisé en ce que** la partie de blocage (54, 56) est cinématiquement verrouillée dans sa position de verrouillage.

4. Dispositif de rappel selon l'une quelconque des revendications précédentes, **caractérisé en ce que** l'élément de renvoi (18), dans sa partie orientée vers la partie de blocage (54), comporte un orifice longitudinal (102) étagé, dans lequel s'engage un pivot (51a, 51b) relié à la partie de blocage (54).

5. Dispositif de rappel selon l'une quelconque des revendications précédentes, **caractérisé en ce qu'**il comporte au moins un élément de serrage (118), par lequel l'élément de renvoi (18, 20) est sollicité dans sa position médiane neutre.

6. Dispositif de rappel selon la revendication 5,
**caractérisé en ce que** l'élément de serrage comporte un ressort de pression hélicoïdal (118), dont une extrémité est logée dans un manchon (122) muni d'une extrémité fermée, laquelle est arrondie ou semi-sphérique, sachant que l'extrémité fermée du manchon (122) est logée de préférence dans un creux (124) correspondant dans le boîtier (12).

7. Dispositif de rappel selon la revendication 5 ou 6, **caractérisé en ce que** sur l'élément de renvoi (18) sont prévus une saillie (120) en forme de téton, qui enserre l'élément de serrage (118) au niveau de son extrémité libre, ou un évidement dans lequel s'engage l'élément de serrage.

8. Dispositif de rappel selon l'une quelconque des revendications précédentes, **caractérisé en ce que** le doigt de déclenchement (16) comporte au moins une ailette d'appui (70), par laquelle il prend appui sur l'élément de renvoi (18, 20).

9. Dispositif de rappel selon l'une quelconque des revendications précédentes, **caractérisé en ce que** le boîtier (12) comporte un élément de paroi (38), dans lequel est ménagée une fente de guidage (73), qui est orientée parallèlement à l'axe longitudinal du doigt de déclenchement (16) et dans laquelle s'engage un téton de guidage (72) du doigt de déclenchement (16), et/ou est ménagée au moins une fente de guidage (117a, 117b) dans laquelle s'engage un téton de guidage (114, 116) qui est disposé sur une partie (98, 100) de l'élément de renvoi (18, 20).

10. Dispositif de rappel selon la revendication 9,
**caractérisé en ce que** la fente de guidage (72, 117a, 117b) comporte une butée pour la trajectoire de mouvement du doigt de déclenchement (16) ou du levier de renvoi (18, 20).

11. Dispositif de rappel selon l'une quelconque des revendications précédentes, **caractérisé en ce que** l'élément de blocage (62, 64), sur son extrémité orientée vers le profil de blocage (14), comporte un cylindre rotatif (28, 30).

12. Dispositif de rappel selon l'une quelconque des revendications précédentes, **caractérisé en ce que** le profil de blocage (14) comporte une partie de rappel, dans laquelle est prévu un décrochement, qui doit être surmonté par l'élément de blocage (64) au moment de l'actionnement dans la position d'indication de direction.

13. Dispositif de rappel selon l'une quelconque des revendications précédentes, **caractérisé en ce que** la partie de blocage (54, 56) comporte une arête de blocage arrondie et/ou aplatie.

14. Dispositif de rappel selon l'une quelconque des revendications précédentes, **caractérisé en ce que** le doigt de déclenchement (16) est en appui contre une pièce intermédiaire (76) précontrainte et comporte dans la zone de contact une saillie (84) qui s'engage par l'arrière avec un jeu dans un évidement (82) dans la pièce intermédiaire (76).

15. Dispositif de rappel selon l'une quelconque des revendications précédentes, **caractérisé en ce que** la partie de blocage (54, 56) est reliée à un saillie en forme de champignon, qui s'engage par l'arrière avec un faible jeu dans un évidement correspondant dans le boîtier (40).

16. Dispositif de rappel selon l'une quelconque des revendications précédentes, **caractérisé en ce que** le doigt de déclenchement (16) comporte un corps de commande (68) qui comporte un contour extérieur sensiblement rectangulaire dans l'ensemble.
